# EUROPEAN PATENT SPECIFICATION

(11) **EP 2 172 373 B1**
(45) Date of publication and mention of the grant of the patent: **21.12.2011**
(21) Application number: 08711333.8
(22) Date of filing: 15.02.2008
(51) Int. Cl.: B60R 21/34

(54) **AIR-BAG DEVICE FOR PEDESTRIAN**
AIRBAGVORRICHTUNG FÜR FUSSGÄNGER
DISPOSITIF DE COUSSIN GONFLABLE DE SÉCURITÉ POUR PIÉTON

(30) Priority: 21.05.2007 JP 2007134307
(43) Date of publication of application: 07.04.2010
(73) Proprietor: Takata Corporation, Tokyo 107-8508 (JP)
(72) Inventor: TAKIMOTO, Takayuki, Tokyo 107-8508 (JP)
(74) Representative: Vossius & Partner
(86) International application number: PCT/JP2008/052503
(87) International publication number: WO 2008/142883

(56) References cited:
- JP-A- 2002 283 939
- JP-A- 2005 096 686
- JP-A- 2005 096 686
- JP-A- 2006 076 448
- JP-A- 2006 076 448
- JP-A- 2006 298 150

## Description

### Technical Field

The present invention relates to a pedestrian airbag apparatus that expands along an A pillar of a vehicle body to prevent a pedestrian or the like (pedestrian, two-wheel vehicle rider, or the like) from directly colliding with the A pillar.

### Background Art

As a pedestrian airbag apparatus of the above-described type, Japanese Unexamined Patent Application Publication No. 2005-96686 discloses an apparatus including a base plate extending along the A pillar of the vehicle body in the vehicle-body forward and rearward direction, an airbag folded body disposed along the base plate, a cover for covering the airbag folded body, and an inflator connected to a front end of the airbag folded body.

The base plate of the pedestrian airbag apparatus disclosed in the publication is fixed to the A pillar (front pillar) using bolts. The base plate and the A pillar are each provided with three openings arranged at intervals in the longitudinal direction of the base plate and the A pillar, that is, the forward-rearward direction of the vehicle. In this case, bolts are inserted into the openings from the outside of the vehicle body and fixed by nuts from the inside of a vehicle cabin.
[Patent Document 1] Japanese Unexamined Patent Application Publication No. 2005-96686

In the case of the pedestrian airbag apparatus disclosed in Japanese Unexamined Patent Application Publication No. 2005-96686, when the apparatus is mounted to the vehicle body, the bolts have to be inserted into the openings from the outside of the vehicle body. Then, in the state of the pedestrian airbag apparatus being held by either a first worker or working robot, the apparatus has to be fastened with the nuts by a second worker from the inside of the vehicle cabin, such that the operation of mounting the apparatus to the vehicle body requires time and effort. Further, the pedestrian airbag apparatus is required to have a structure mountable to a narrow portion of the A pillar and arranged with high space efficiency.

### Disclosure of Invention

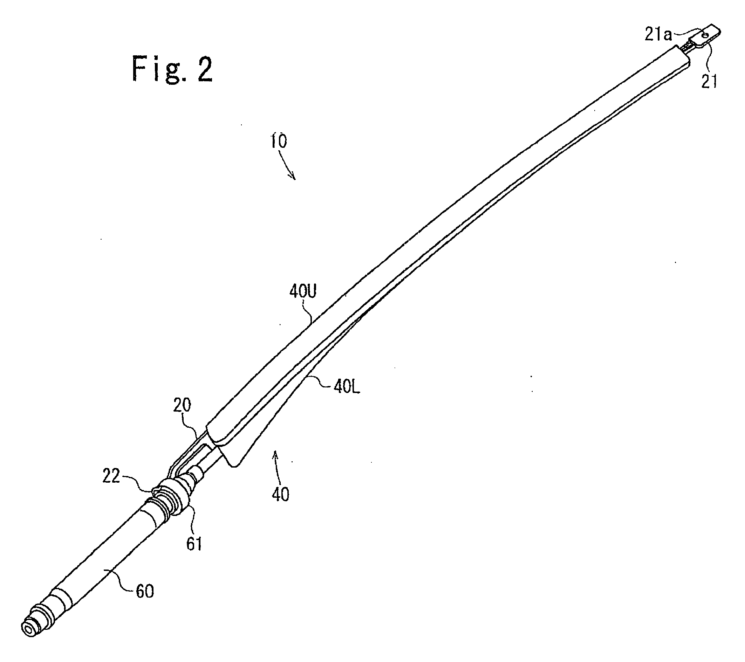

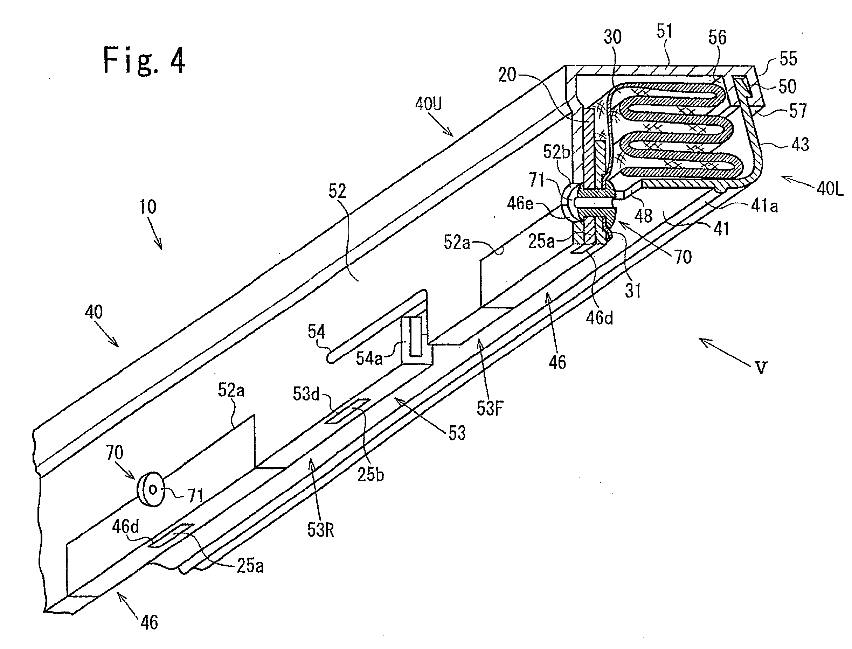

Document JP 2006-076448 A, considered to represent the closest prior art, relates to an airbag device for protecting a pedestrian which comprises an airbag section arranged along the front pillar and an airbag section arranged between the hood and the fender. As shown, e.g., in Figures 2 and 4, the airbag and the inflator for inflating the airbag are attached to a retainer via a bolt and a nut, and the retainer is fixed to a rail section of the front pillar.
A curved covering is formed in the front side of the front pillar. Engagement pieces comprising hooks are formed in the covering along the longitudinal direction and extend into engagement holes of the retainer. The ends of the covering are pressed down by strips.
An object of the present invention is to provide a pedestrian airbag apparatus improved in mountability to a vehicle body and having a structure mountable to the A pillar and arranged with high space efficiency.

A first embodiment of a pedestrian airbag apparatus is represented by a first part of the present invention as defined in claim 1.

A second embodiment is the pedestrian airbag apparatus is represented by a second part of the present invention as defined in claim 1.

A third embodiment is the pedestrian airbag apparatus as described in the second embodiment and characterized in that a plurality of engagement portions for engagement to the base plate is provided to the one side of longitudinal sides of each of the first cover and the second cover.

A fourth embodiment is the pedestrian airbag apparatus as described in the third embodiment and characterized in that the engagement portions of the first cover and the engagement portions of the second cover are alternately provided to the base plate in the longitudinal direction. Brief Description of Drawings

[Fig. 1] Fig. 1 is a perspective view of a pedestrian airbag apparatus according to an embodiment.
[Fig. 2] Fig. 2 is a perspective view of the pedestrian airbag apparatus as viewed from the direction II of Fig. 1.
[Fig. 3] Fig. 3 is an exploded perspective view of the pedestrian airbag apparatus of Fig. 1.
[Fig. 4] Fig. 4 is a cross-sectional perspective view taken along the line IV-IV of Fig. 1.
[Fig. 5] Fig. 5 is a cross-sectional perspective view as viewed from the direction V of Fig. 4.
[Fig. 6] Fig. 6a is a side view of a base plate of the pedestrian airbag apparatus of Fig. 1; Fig. 6b is a top view of a portion B of Fig. 6a; and Fig. 6c is a cross-sectional view taken along the line C-C of Fig. 6b.
[Fig. 7] Fig. 7a is a side view of an upper cover of the pedestrian airbag apparatus of Fig. 1; and Fig. 7b is a top view of the upper cover.
[Fig. 8] Fig. 8 is a cross-sectional view taken along the line VIII-VIII of Fig. 7a.
[Fig. 9] Fig. 9 is a cross-sectional view taken along the line IX-IX of Fig. 7a.
[Fig. 10] Fig. 10 is a cross-sectional view taken along the line X-X of Fig. 7a.
[Fig. 11] Fig. 11 is a cross-sectional view taken along the line XI-XI of Fig. 7a.
[Fig. 12] Fig. 12a is a side view of a lower cover of the pedestrian airbag apparatus of Fig. 1; and Fig. 12b is a top view of the lower cover.
[Fig. 13] Fig. 13 is a cross-sectional view taken along the line XIII-XIII of Fig. 12a.
[Fig. 14] Fig. 14 is a cross-sectional view taken along the line XIV-XIV of Fig. 12a.
[Fig. 15] Fig. 15 is a cross-sectional view taken along the line XV-XV of Fig. 12a.
[Fig. 16] Fig. 16 is an end elevational view taken along the line XVI-XVI of Fig. 12a.
[Fig. 17] Fig. 17 is an exploded perspective view showing a procedure of assembling the pedestrian airbag apparatus of Fig. 1.
[Fig. 18] Fig. 18 is an exploded perspective view showing the procedure of assembling the pedestrian airbag apparatus of Fig. 1.
[Fig. 19] Fig. 19 is an exploded perspective view showing the procedure of assembling the pedestrian airbag apparatus of Fig. 1.
[Fig. 20] Fig. 20 is a cross-sectional view taken along the line XX-XX of Fig. 19.
[Fig. 21] Fig. 21 is a cross-sectional view taken along the line XXI-XXI of Fig. 19.
[Fig. 22] Fig. 22 is a perspective view of a peripheral portion of an A pillar of a vehicle body in which the pedestrian airbag apparatus of Fig. 1 is mounted.
[Fig. 23] Fig. 23 is a cross-sectional view taken along the line XXIII-XXIII of Fig. 22.
[Fig. 24] Fig. 24 is a cross-sectional view taken along the line XXIV-XXIV of Fig. 22.
[Fig. 25] Fig. 25 is a cross-sectional view of a portion similar to Fig. 23, showing the state of airbag expansion.

### Best Modes for Carrying Out the Invention

A pedestrian airbag apparatus of the present invention can be mounted to a vehicle body in the manner that the pedestrian airbag apparatus is disposed along an A pillar of the vehicle body, retaining portions of a base plate are retained to the A pillar, an anchor portion on a rear end side of the base plate is fixed to the vicinity of a roof side rail, and an inflator on a front end side is fixed to, for example, a hood ridge of the vehicle body. When mounting the pedestrian airbag apparatus of the present invention to the vehicle body, it is not necessary to fix the base plate to the A pillar by fastening nuts from the inside of the vehicle cabin. Hence, the mounting operation of the pedestrian airbag apparatus can be readily performed. Further, when fixing an airbag apparatus with bolts, rivets, or the like to the A pillar, a mounting seat surface for fixing needs to be provided on the A pillar. However, since the pedestrian airbag apparatus of the present invention does not require such a mounting seat surface, resulting in high efficiency.

According to the second embodiment of the pedestrian airbag apparatus, the first cover and the second cover are mounted to the base plate with a high strength. When the airbag expands, engaged longitudinal sides of the first cover and the second cover are separated from each other, thereby causing the airbag to unfold and expand.

According to the third and fourth embodiments of the pedestrian airbag apparatus, forces exerted on the respective covers in the direction of separation from the base plate when the airbag expands are resisted not only by the fasters but also by the engagement portions.

According to the fourth embodiment of the pedestrian airbag apparatus, stresses caused due to the forces described above are widely dispersed.

Embodiments of the present invention will be described below with reference to the drawings.

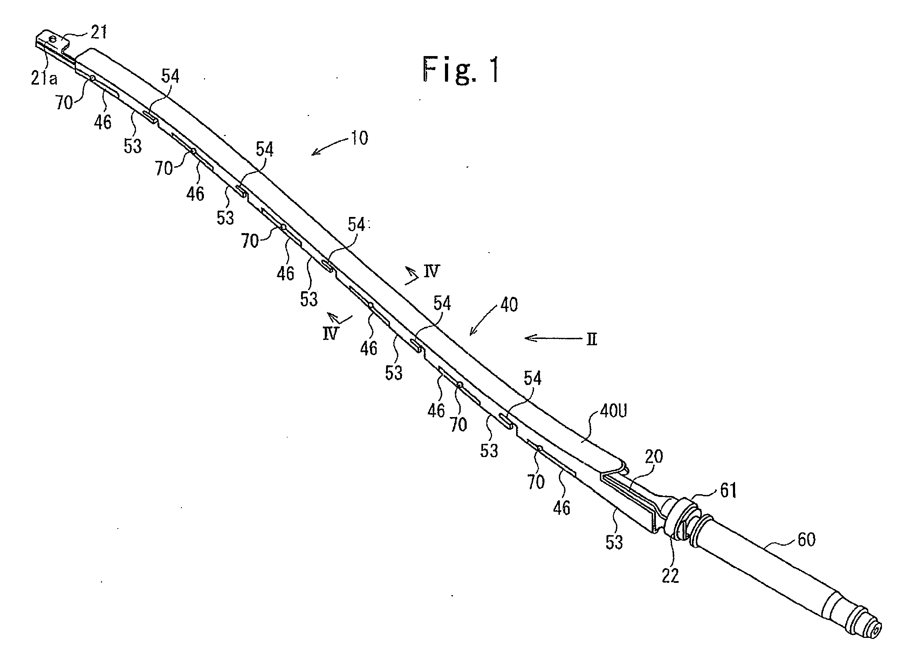

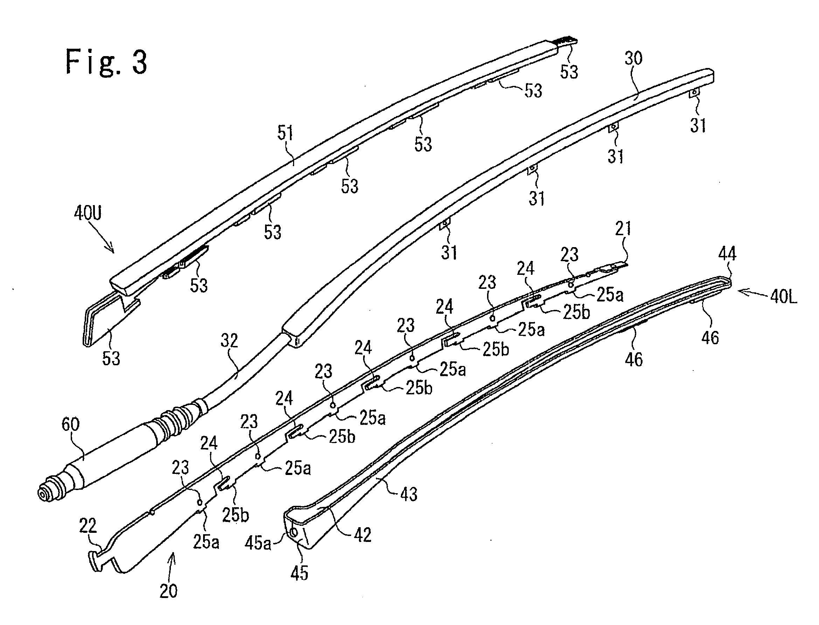

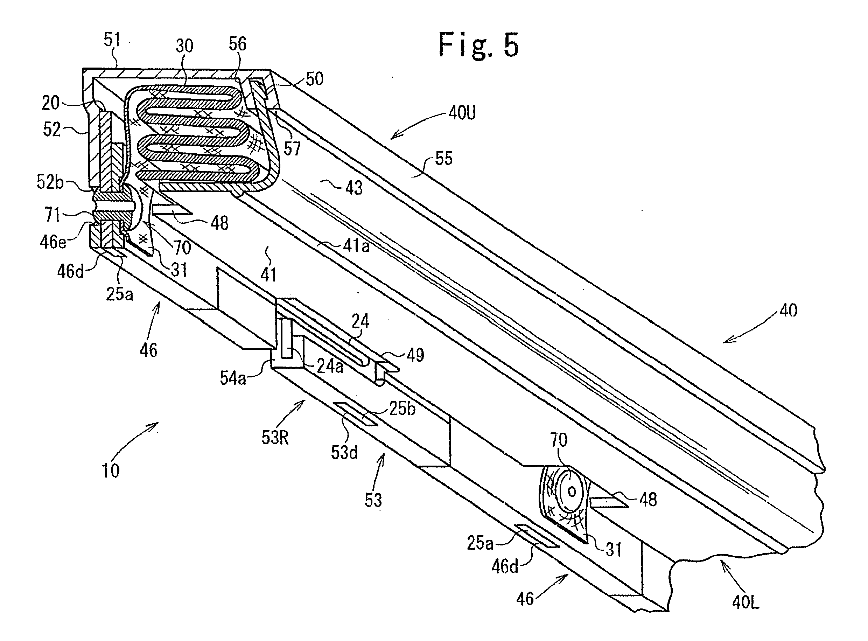

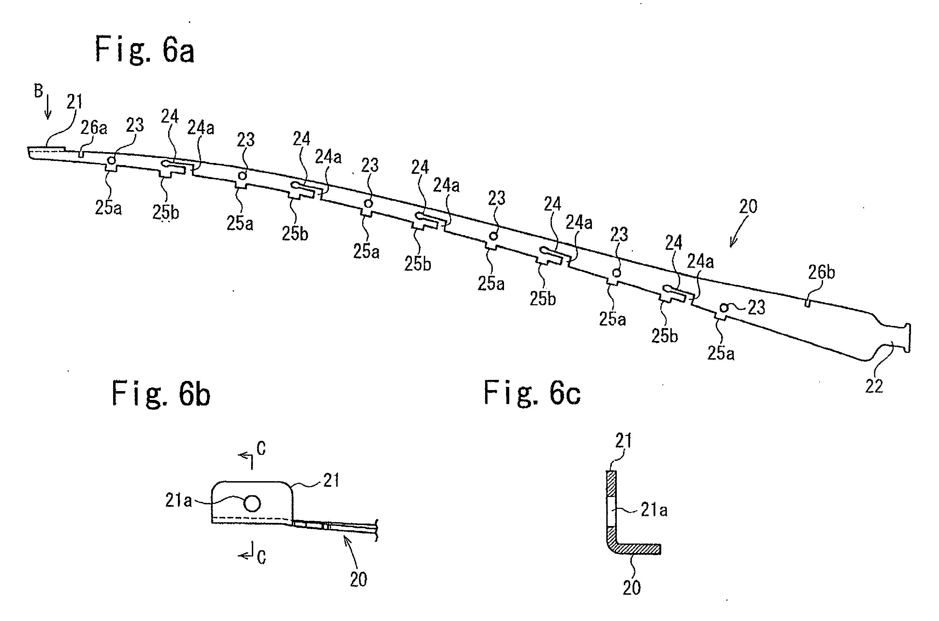

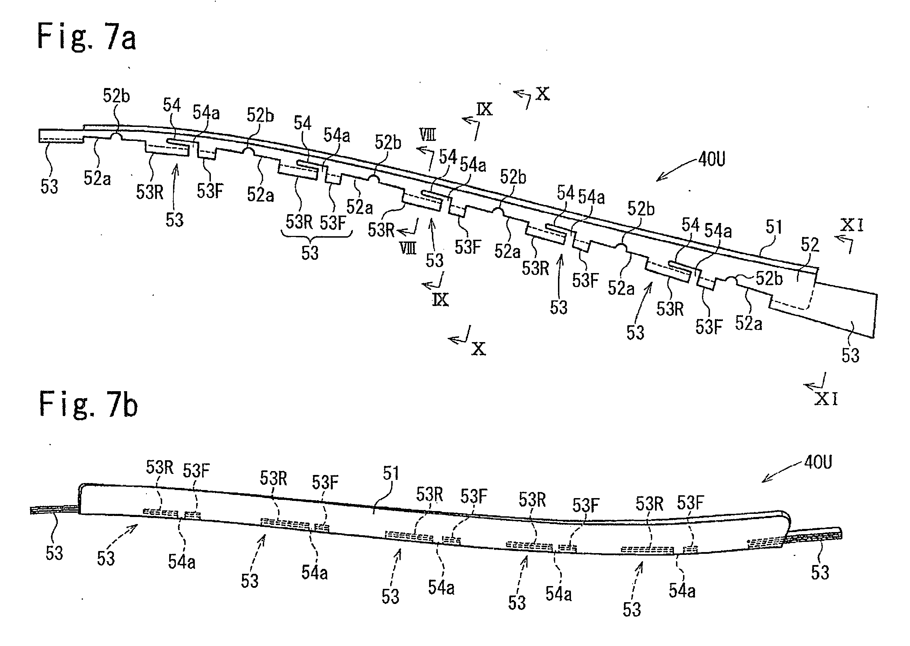

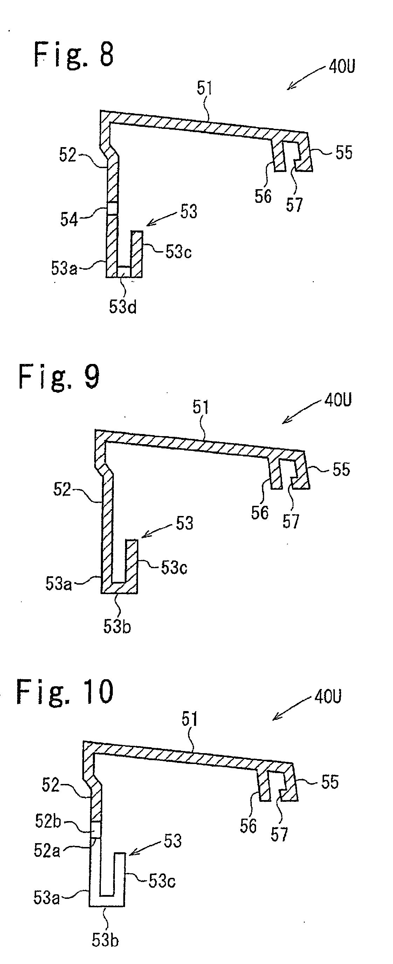

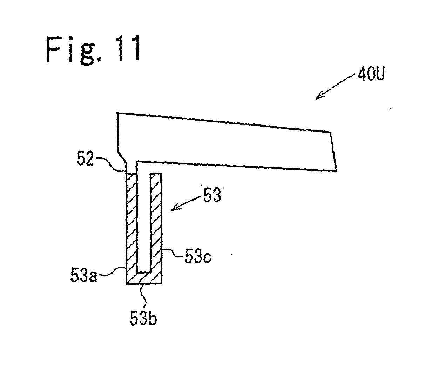

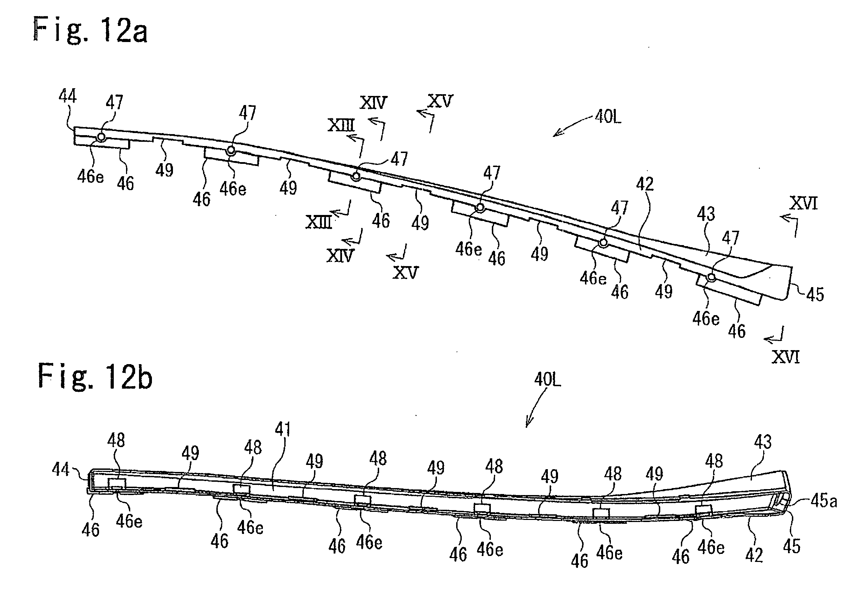

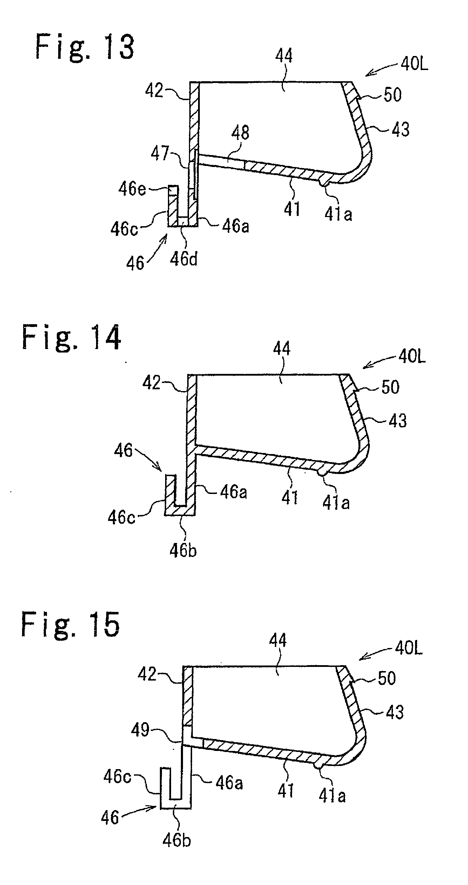

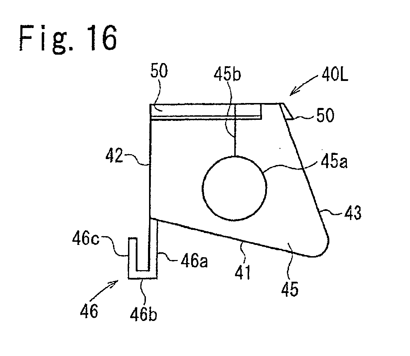

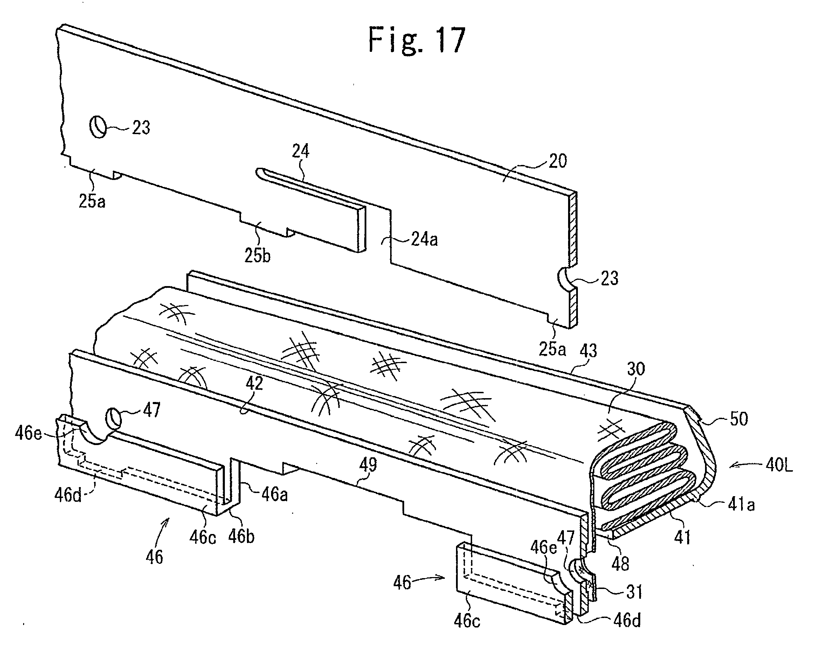

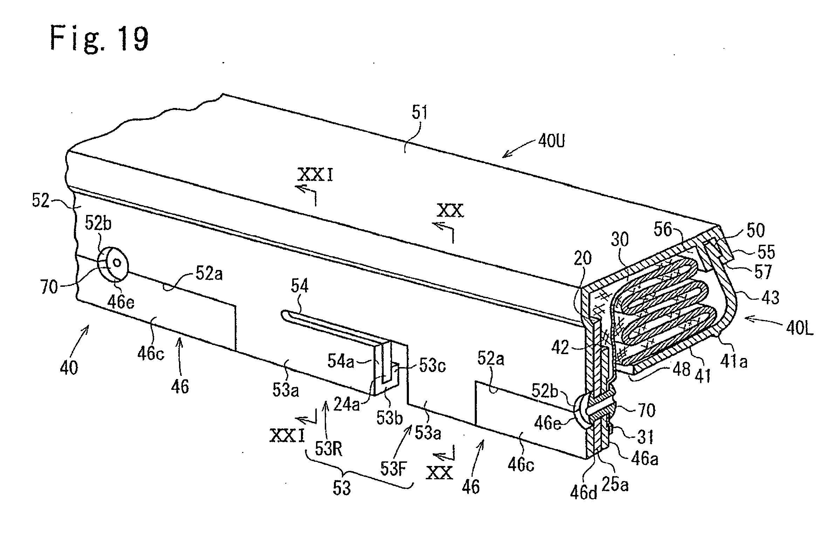

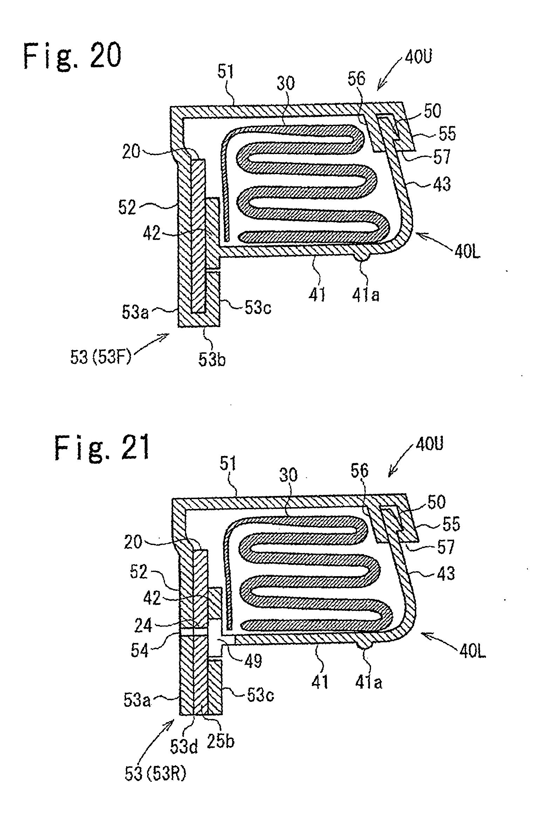

Figs. 1 and 2 are perspective views of a pedestrian airbag apparatus according to an embodiment. Fig. 3 is an exploded perspective view of the pedestrian airbag apparatus. Figs. 4 and 5 are cross-sectional perspective views taken along the line IV-IV of Fig. 1. Figs. 6a to 6c are illustrations of a base plate of the pedestrian airbag apparatus. Fig. 7a and 7b are illustrations of an upper cover of the pedestrian airbag apparatus. Figs. 8 to 11 are, respectively, cross-sectional views taken along the lines VIII-VIII, IX-IX, X-X, and XI-XI of Fig. 7a. Figs. 12a and 12b are illustrations of a lower cover of the pedestrian airbag apparatus. Figs. 13 to 15 are, respectively, cross-sectional views taken along the lines XIII-XIII, XIV-XIV, and XV-XV of Fig. 12a. Fig. 16 is an end elevational view taken along the line XVI-XVI of Fig. 12a. Figs. 17 to 19 are exploded perspective views showing a procedure of assembling the pedestrian airbag apparatus. Figs. 20 and 21 are, respectively, cross-sectional views taken along the lines XX-XX and XXI-XXI of Fig. 19.

Fig. 2 is a perspective view of the pedestrian airbag apparatus as viewed from the direction II of Fig. 1; and Fig. 5 is a cross-sectional perspective view as viewed from the direction V of Fig. 4. Fig. 6a is a side view of the base plate; Fig. 6b is a top view of a portion B of Fig. 6a; and Fig. 6c is a cross-sectional view taken along the line C-C of Fig. 6b. Fig. 7a is a side view of the upper cover; and Fig. 7b is a top view of the upper cover. Fig. 12a is a side view of the lower cover; and Fig. 12b is a top view of the lower cover.

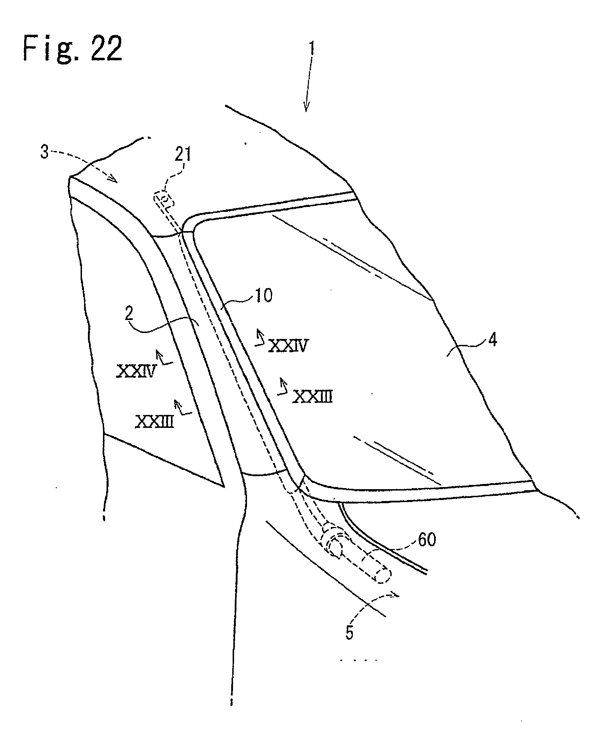

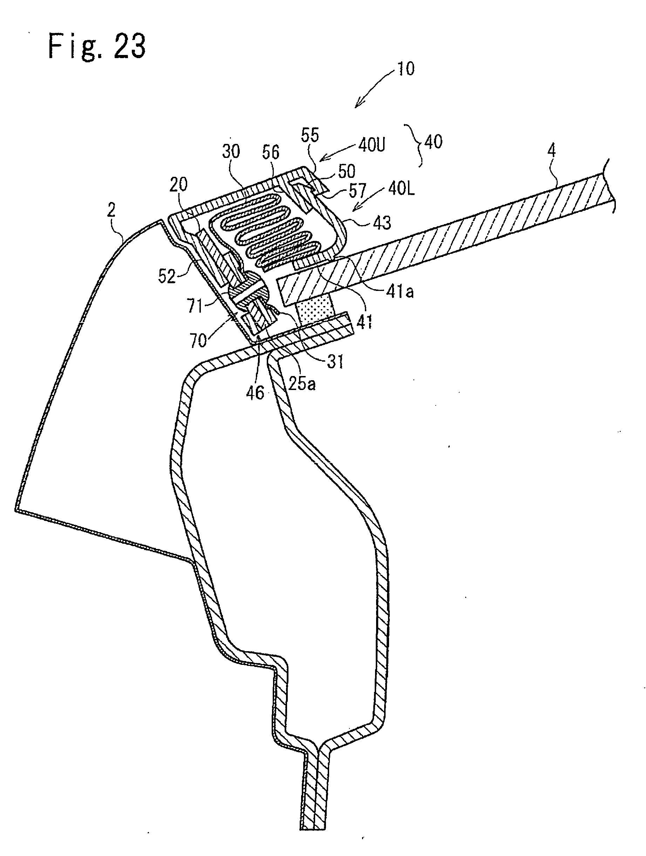

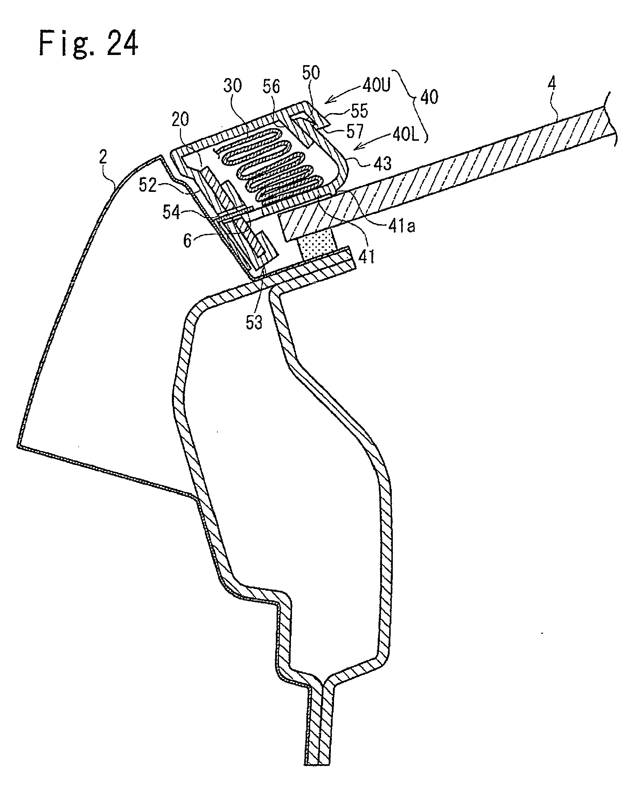

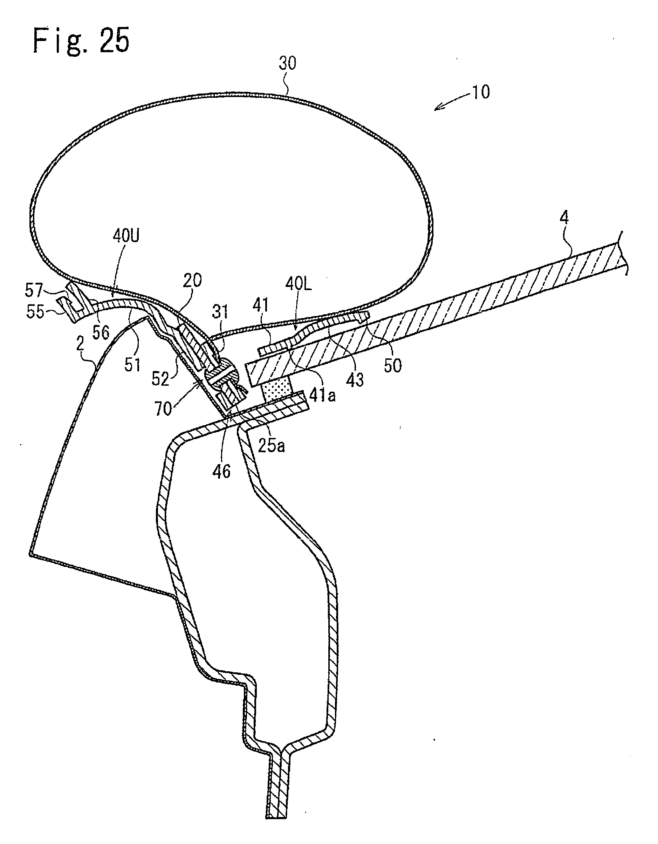

In addition, Fig. 22 is a perspective view of a peripheral portion of an A pillar of a vehicle body to which the pedestrian airbag apparatus of Fig. 1 is mounted. Figs. 23 and 24 are, respectively, are cross-sectional views taken along the lines XXIII-XXIII and XXIV-XXIV of Fig. 22. Fig. 25 is a cross-sectional view of a portion similar to Fig. 23, showing the state of airbag expansion.

In the description below, the forward and rearward direction, leftward and rightward direction, and upward and downward direction respectively correspond to the vehicle-body forward and rearward direction, vehicle-body leftward and rightward direction (vehicle-body width direction), and vehicle-body upward and downward direction in the state of the vehicle body to which the pedestrian airbag apparatus is mounted.

The pedestrian airbag apparatus, denoted by numeral 10, includes a base plate 20 extending in the vehicle-body forward and rearward direction along an A pillar 2 of a vehicle body 1, a folded body of an airbag 30 (or "airbag 30 folded body", hereafter) disposed along the base plate 20, a cover 40 for covering the airbag 30 folded body, and an inflator 60 connected to a front end of the airbag 30 through a duct 32. In the present embodiment, the cover 40 includes a lower cover 40L as a first cover for covering a lower side of the airbag 30 folded body, and an upper cover 40U as a second cover for covering an upper side of the airbag 30 folded body.

As shown in Figs. 6a to 6c, the base plate 20 of the present embodiment has a shape as a long and narrow strip. The base plate 20 is disposed so that the longitudinal direction thereof coincides with substantially the forward and rearward direction, and the normal line direction of the surface thereof coincides with substantially the leftward and rightward direction. In Fig. 6a, a left end side of the base plate 20 is a rear end side when mounted to the vehicle body, and the right end side thereof is a front end side when mounted to the vehicle body.

Although the base plate 20 of the present embodiment is made from a metal plate, the material of the base plate 20 is not limited thereto.

An anchor portion 21 for mounting the pedestrian airbag apparatus 10 to a roof side rail 3 of the vehicle body 1 is provided to the rear end side of the base plate 20. In the present embodiment, the anchor portion 21 is formed of a substantially L-shaped protrusion bent from an upper edge portion of the base plate 20 in the lateral direction. Reference numeral 21a denotes an insertion hole provided in the anchor portion 21, through which a fastener, such as a bolt or rivet, is inserted.

An inflator fixing portion 22 is provided to the front end side of the base plate 20. Referring to Fig. 6a, in the present embodiment, the inflator fixing portion 22 is provided in the manner that, in the vicinity of the front end of the base plate 20, a constricted portion is formed in such a manner as to cut respective upper and lower edges of the base plate 20, thereby allowing the constricted portion to retain a later-described band 61.

As shown in Fig. 6a, a plurality of rivet insertion holes 23 (six holes in the present embodiment) and a plurality of slits 24 (five slits in the present embodiment) are provided in a midway portion of the base plate 20 in the longitudinal direction to penetrate through the surface of the base plate 20. The rivet insertion holes 23 through which rivets 70 being used as fasteners to fix the lower cover 40L to the base plate 20 are inserted, and the slits 24 are provided as retaining portions for retainment to the A pillar 2. In the present embodiment, the rivet insertion holes 23 and the slits 24 are alternately disposed at predetermined intervals in the longitudinal direction of the base plate 20. However, the numbers and arrangements of the rivet insertion holes 23 and the slits 24 are not limited to those described above. For example, the rivet insertion holes 23 and the slits 24 may not be alternately disposed, and the numbers of the rivet insertion holes 23 may be different from the number of slits 24. For example, the arrangement in which slit 24, slit 24, rivet insertion hole 23, slit 24, and slit 24 are provided in this order may be available. When the rivet insertion holes 23 and the slits 24 are disposed on substantially the same line as described above, the space efficiency is improved, and the mounting efficiency is improved. Further, since both the rivet insertion holes 23 and the slits 24 are provided close to each other, secure mounting is implemented within such a small space.

As shown in Fig. 6a, in the present embodiment, a cutout portion 24a is formed from the lower edge of the base plate 20 to a front end side of each of the slits 24. The front end side of each slit 24 communicates with the lower edge of the base plate 20 through the cutout portion 24a.

The lower edge of the base plate 20 is provided with a plurality of engagement pieces 25a (six pieces in the present embodiment) for engagement with slits 46d of respective engagement portions 46 of the later-described lower cover 40L, and a plurality of engagement pieces 25b (five pieces in the present embodiment) for engagement with slits 53d of respective engagement portions 53 of the upper cover 40U. As shown in Fig. 6a, in the present embodiment, the engagement pieces 25a and 25b are each formed of a claw-like protrusion downwardly extending from the lower edge of the base plate 20. The engagement pieces 25a and 25b are alternately disposed at predetermined intervals in the longitudinal direction of the base plate 20.

In the present embodiment, each engagement piece 25a is disposed in the vicinity right under the rivet insertion hole 23, and each engagement piece 25b is disposed downwardly in the vicinity of the rear end portion of each slit 24. However, the numbers and arrangements of the engagement pieces 25a and 25b are not limited to those described above.

A recess portion 26a for engagement with a rear edge of the upper cover 40U is provided on the upper edge of the base plate 20 in a midway position between the rivet insertion hole 23 provided on the rearmost end side of the base plate 20 and the anchor portion 21. In addition, a recess portion 26b for engagement with a front edge of the upper cover 40U is provided on the upper edge of the base plate 20 in a midway position between the rivet insertion hole 23 provided on the frontmost end side of the base plate 20 and the inflator fixing portion 22. In the present embodiment, the length between the recess portions 26a and 26b of the base plate 20 is substantially the same as the length of the A pillar 2.

The airbag 30 is in a tubular shape expandable along the A pillar 2. Preferably, the length of the airbag 30 in an expanded state is longer than the length of the A pillar 2, and is sufficient to be able to cover a portion extending up to the vicinity of a hood hinge located at the front of the A pillar 2. However, the length of the airbag 30 in the expanded state is not limited to that described above. As shown in Fig. 3, in a normal state, that is, a non-expanded state, the airbag 30 is folded into a long, slender shape in the forward and rearward direction. The same number of auricular mounting pieces 31 as that of the rivet insertion holes 23 (that is, six pieces in the present embodiment) are provided to protrude from the lower edge of the airbag 30 in the positional relationship of overlapping the respective rivet insertion holes 23 when the airbag 30 folded body is disposed along the base plate 20. Each of the mounting pieces 31 is provided with a rivet insertion hole 31a that overlaps each of the rivet insertion holes 23.

A gas introducing duct 32 extends from the front end of the airbag 30. The inflator 60 is connected to a front end of the gas introducing duct 32.

In the present embodiment, the cover 40 is concurrently used as a weather strip between the A pillar 2 and a windshield 4. As shown in Fig. 23, the cover 40 is disposed in a corner portion between a side face of the A pillar 2 on the side of the windshield 4 and a front face of the windshield 4. The cover 40, that is, the lower cover 40L and the upper cover 40U are formed of rubber or elastomeric synthetic resin similar to a material of an ordinary weather strip. However, the material of the cover 40 is not limited to that described above. Further, the lower cover 40L and the upper cover 40U may be formed of materials different from each other.

In the present embodiment, the lower cover 40L has a long box-like shape extending along the side face of the A pillar 2 on the side of the windshield 4 in the vehicle-body forward and rearward direction. The airbag 30 folded body is stored in the lower cover 40L. As shown in Figs. 12a, 12b, and 23, the lower cover 40L includes a bottom plate portion 41 overlapping the front face of the windshield 4; side walls 42 and 43, respectively, elevated from side edges of the bottom plate portion 41 on the side of the A pillar 2 and on the side opposite the A pillar 2; and end walls 44 and 45, respectively, elevated from rear and front ends of the bottom plate portion 41. A top side of the lower cover 40L is open.

The base plate 20 is disposed along an outer face of the side wall 42 on the side of the A pillar 2 of the lower cover 40L, that is, a face directed toward an outer side of the lower cover 40L.

A plurality of falling pieces 46a downwardly protrude along a side edge of a lower face of the bottom plate portion 41 on the side of the A pillar 2. With reference to Figs. 12a and 13 to 16, in the present embodiment, six falling pieces 46a are disposed at predetermined intervals in a longitudinal direction of the lower cover 40L. Each of the falling pieces 46a is disposed so that a near-middle portion in the longitudinal direction of each piece substantially matches the arranged position of each of the rivet insertion holes 23 of the base plate 20.

As shown in Fig. 14, the respective falling pieces 46a are formed in the manner that the side wall 42 is partly extended downward. A face of the falling piece 46a on the side of the A pillar 2 is continually flush with the outer face of the side wall 42, and a face thereof on the side opposite the A pillar 2 is continually flush with an inner face of the side wall 42, or more specifically, a face directed toward the inner side of the lower cover 40L through a later-described opening 48.

A projecting piece 46b is protrudingly provided to project toward the side of A pillar 2 from a lower edge of each of the falling pieces 46a. Further, a rising piece 46c upwardly rising from an edge portion of the projecting piece 46b on the side of the A pillar 2 is elevationally provided. The distance between the rising piece 46c and the falling piece 46a is substantially equal to the thickness of the base plate 20, and the lower edge of the base plate 20 is engaged with a portion between the pieces. That is, in the present embodiment, the engagement portion 46 for engagement with the lower edge of the base plate 20 is constituted of the falling piece 46a, the projecting piece 46b, and the rising piece 46c.

In the present embodiment, the slit 46d for engagement with the engagement piece 25a downwardly protruding from the lower edge of the base plate 20 is provided to the projecting piece 46b of each of the engagement portions 46.

On the continuous face of the side wall 42 and each falling piece 46a, in the state that the lower edge of the base plate 20 is engaged with each engagement portion 46, each rivet insertion hole 47 is formed to be open in a position overlapping each rivet insertion hole 23 of the base plate 20. Further, as shown in Fig. 12b, in the bottom plate portion 41, an opening 48 through which each mounting piece 31 is inserted is provided in a position facing each rivet insertion hole 47. As shown in Fig. 12b, each opening 48 is formed to contact the inner face of the side wall 42.

In the present embodiment, a cutout 46e in the shape of substantially a semicircle concentric with each rivet insertion hole 47 is formed in a position opposing each rivet insertion hole 47 on the upper edge of the rising piece 46c of each engagement portion 46. The diameter of the cutout 46e is greater than the diameter of a head portion 71 of the rivet 70.

On the side wall 42, in the state that the base plate 20 is engaged with each engagement portion 46, a slit 49 overlapping each slit 24 is provided in a position overlapping the slit 24, or more specifically, in a near-middle portion between the mutually adjacent engagement portions 46 and 46. In the present embodiment, each slit 49 is formed in such a manner as to cut a corner portion between the lower edge of the side wall 42 and the edge portion of the bottom plate portion 41 on the side of the A pillar 2.

As shown in Figs. 13 to 16, laterally projecting claw-like engagement portions 50 are individually provided to an upper edge of the side wall 43 on the side opposite the A pillar 2 and upper edges of the end walls 44 and 45.

As shown in Fig. 16, an opening 45a through which the duct 32 connecting the airbag 30 and the inflator 60 is inserted is provided on the end wall 45 on the front end side of the lower cover 40L. In the present embodiment, a cut 45b for inserting the duct 32 into the opening 45a is provided extending from the upper edge of the end wall 45 to the opening 45a.

Reference numeral 41a denotes a lip portion extending along a peripheral edge of the lower face of the bottom plate portion 41. In the case where, as shown in Fig. 23, the lower cover 40L is disposed along the front face of the windshield 4, the lip portion 41a contacts the windshield 4.

The upper cover 40U includes a main plate portion 51 for covering the top side of the lower cover 40L, and a leg-like piece 52 downwardly falling from an edge portion of the main plate portion 51 on the side of the A pillar 2.

The upper cover 40U is disposed in the manner that the leg-like piece 52 overlaps a portion of the base plate 20 disposed along the side wall 42 of the lower cover 40L, in which the portion is even closer to the side of the A pillar 2.

As shown in Fig. 7a, each recess portion 52a for engagement with each rising piece 46c is provided on a lower edge of the leg-like piece 52 in a position overlapping the rising piece 46c of the engagement portion 46 of the lower cover 40L. Further, a cutout 52b having substantially a semicircular shape and paired with the cutout 46e is provided on an upper edge of each recess portion 52a in a portion facing the cutout 46e formed on the upper edge of the rising piece 46c. In this case also, the diameter of the cutout 52b is greater than the diameter of the head portion 71 of the rivets 70. When each rising piece 46c is engaged with each recess portion 52a, the semicircular cutouts 46e and 52b are joined together. Accordingly, a circular opening is formed to be concentric with each rivet insertion hole 23 of the base plate 20 and to be greater in diameter than the head portion 71 of the rivets 70.

In the leg-like piece 52, each portion between the mutually adjacent recess portions 52a and 52a is formed as a falling piece 53a downwardly falling along the base plate 20. In the state that each engagement portion 46 of the lower cover 40L is engaged with each recess portion 52a, the lower end of each falling piece 53a is located at substantially the same height as the lower end of the falling piece 46a of each engagement portion 46. A projecting piece 53b protrudes in such a manner as to project to the lower side of the base plate 20 from the lower end of each falling piece 53a. In addition, there is elevationally provided a rising piece 53c rising along the face of base plate 20 on the side of the lower cover 40L from an edge portion of the projecting piece 53b on its leading end side in the projection direction.

More specifically, similar to each engagement portion 46 of the lower cover 40L, the engagement portion 53 for engagement with the lower edge of the base plate 20 is formed in the upper cover 40U including the falling piece 53a, the projecting piece 53b, and the rising piece 53c.

The projecting pieces 53b of the respective engagement portions 53 are each provided with a slit 53d for engagement with each engagement piece 25b downwardly protruding from the lower edge of the base plate 20.

In the state that the lower edge of the base plate 20 is engaged with each engagement portion 53, a slit 54 overlapping each slit 24 is provided in the leg-like piece 52 in a position overlapping the slit 24 of the base plate 20, or more specifically, in an upper portion of each engagement portion 53 (falling piece 53a).

Further, a cutout portion 54a is formed toward the front end side of each slit 54 from the lower edge of the falling piece 53a of each engagement portion 53 to overlap each cutout portion 24a of the base plate 20. The cutout portion 54a continues to the projecting piece 53b and rising piece 53c of each engagement portion 53. The cutout portion 54a divides each engagement portion 53 into a front-half side 53F and a rear-half side 53R.

The front-half side 53F of each engagement portion 53 is engaged with the lower edge of the front side located forwardly of the cutout portion 24a of the base plate 20. The rear-half side 53R is engaged with the lower edge on the rear side located at the rear of the cutout portion 24a of the base plate 20. The slits 53d are provided in the projecting piece 53b of the rear-half side 53R.

An extended piece 55 downwardly extending to overlap an outer face of the side wall 43 and outer faces of the respective end walls 44 and 45 of the lower cover 40L is formed to extend from the edge portion of the main plate portion 51 on the side opposite the A pillar 2 and two edge portions on the front end side and the rear end side. The extended piece 55 continually extends from a front end edge of the main plate portion 51 to a rear end edge of the main plate portion 51 through the edge portion of the main plate portion 51 on the side opposite the A pillar 2. Both end sides of the extended piece 55 in the extension direction continually extend to the front and rear edges of the leg-like piece 52.

A convex rib 57 elastically engageable with the claw-like engagement portion 50 provided to the upper edges of the side wall 43 and the end walls 44 and 45 is provided on a counter face of the extended piece 55 opposing the side wall 43 and the end walls 44 and 45.

In the main plate portion 51, a falling piece 56 downwardly falling to overlap the inner face of the side wall 43 and the inner faces of the respective end walls 44 and 45 of the lower cover 40L is provided to protrude from a portion closer to a central side of the main plate portion 51 than the extended piece 55. The falling piece 56 is provided to extend substantially parallel to the extended piece 55.

In the present embodiment, as shown in Figs. 1 to 3, the inflator 60 is in a rod shape, in which a gas injection port (not shown) is provided on one end side in a longitudinal direction thereof, and an initiator (no reference numeral is shown) is provided on the other side. In the state that the inflator 60 is positioned such that the longitudinal direction thereof coincides with the vehicle-body longitudinal direction, and the gas injection port is directed toward the vehicle-body rearward side, the inflator 60 is disposed along the inflator fixing portion 22 located on the front end side of the base plate 20 and is fixed to the inflator fixing portion 22 in such a manner as to be bound thereon with a band 61.

Although not shown, a bracket for fixing the inflator 60 to a hood ridge 5 is mounted to the inflator 60.

A procedure of assembling the pedestrian airbag apparatus 10 will now be described below.

First, components are prepared to be ready in the manner that, as shown in Fig. 3, the airbag 30 is folded into the long, slender shape in the forward and rearward direction, and the inflator 60 is connected to the duct 32 located on the front end side of the folded body. Ordinarily, the airbag 30 folded body is provided in the state of being shape-retained with a shape-retaining material (not shown) mounted in such a manner as to surround the circumference of the folding body. The shape-retaining material is either broken or ruptured when the airbag 30 is expanded.

Subsequently, with reference to Fig. 17, the airbag 30 folded body is disposed in the lower cover 40L. In this case, the respective mounting pieces 31 of the airbag 30 are passed through the respective openings 48 at the bottom of the lower cover 40L and are thereby pulled out downwardly of the lower cover 40L. The duct 32 is inserted into the opening 45a of the end wall 45 in such a manner as to expand the cut 45b of the end wall 45 located on the front end side of the lower cover 40L.

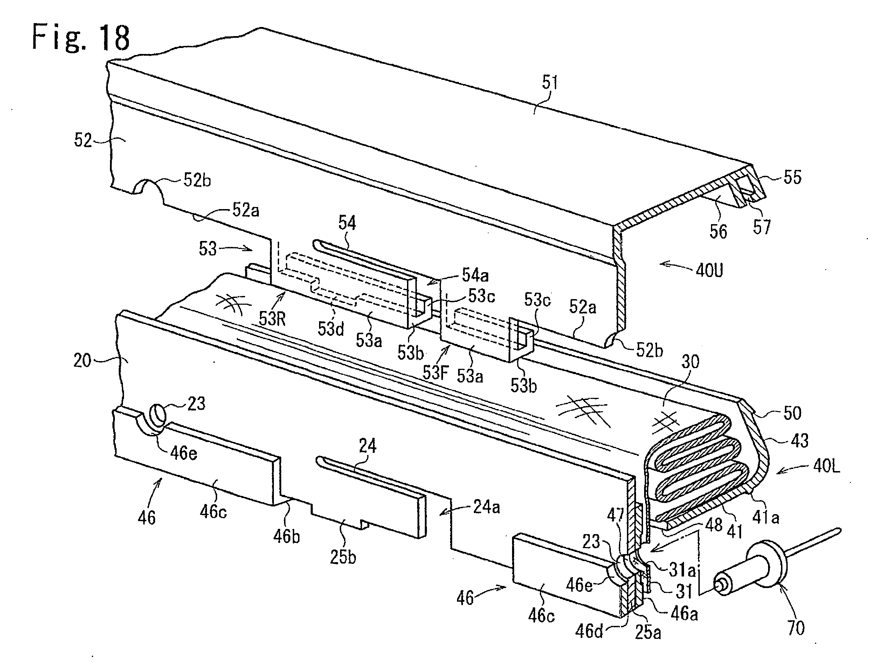

In addition, with reference to Figs. 17 and 18, the base plate 20 is disposed along the outer face of the side wall 42 of the lower cover 40L, and the lower edge thereof is brought into engagement with the respective engagement portions 46. In this case, the respective engagement pieces 25a on the lower edge of the base plate 20 are brought into engagement with the slits 46d of the respective engagement portions 46.

Then, the inflator 60 is fixed with the band 61 to the inflator fixing portion 22.

Before disposition of the airbag 30 in the lower cover 40L, the base plate 20 may be set in the lower cover 40L.

Thereafter, the respective mounting pieces 31 of the airbag 30, which have been pulled out downwardly of the lower cover 40L from the respective openings 48, are overlapped with the respective rivet insertion holes 47 of the lower cover 40L. Then, the rivets 70 are inserted through the mutually overlapped rivet insertion holes 31a of the mounting pieces 31, rivet insertion holes 47 of the lower cover 40L, and rivet insertion holes 23 of the base plate 20, as shown in Fig. 18, and then caulking is carried out with the rivets 70 using a riveter (not shown). As a result, the respective mounting pieces 31 of the airbag 30 and the lower cover 40L are fixed with the rivets 70 to the base plate 20.

Subsequently, the upper cover 40U is mounted to the lower cover 40L in such a manner that the leg-like piece 52 is overlapped with the outer side of the base plate 20 and the main plate portion 51 covers the lower cover 40L. In this case, each engagement portion 46 of the lower cover 40L is brought into engagement with the recess portion 52a between the engagement portions 53 and 53 of the upper cover 40U. In addition, each engagement portion 53 of the upper cover 40U is brought into engagement with the lower edge of the base plate 20 between the engagement portions 46 and 46 of the lower cover 40L. At this time, the respective engagement pieces 25b on the lower edge of the base plate 20 are brought into engagement with the slits 53d of the respective engagement portions 53.

In the above, the leg-like piece 52 may be fitted along the outer side of the base plate 20 after the respective engagement portions 53 are retained to the lower edge of the base plate 20. Further, the respective engagement portions 53 may be brought into engagement with the lower edge of the base plate 20 in such a manner that the respective engagement portions 53 are downwardly pulled after the leg-like piece 52 is overlapped with the outer side of the base plate 20.

Subsequently, the upper edges of side wall 43 and the respective end walls 44 and 45 of the lower cover 40L are pushed into the portions between the extended piece 55 and the falling piece 56 in the peripheral portions of the main plate portion 51. Thus, the engagement portion 50 of the side wall 43 and the respective end walls is brought into elastic engagement with the convex rib 57 located on the back side of the extended piece 55, thereby fixing the main plate portion 51 to the lower cover 40L. In this case, the rear end edge of the main plate portion 51 is brought into engagement with the recess portion 26a located on the upper edge on the rear end side of the base plate 20. Concurrently, the front end edge of the main plate portion 51 is brought into engagement with the recess portion 26b located on the upper edge on the front end side of the base plate 20.

Accordingly, the airbag 30 folded body is in the state of being covered by the cover 40 constituted of the lower cover 40L and the upper cover 40U. In this state, the rear end side of the base plate 20 including the anchor portion 21 extends rearward at the rear end of the cover 40, and the front end side of the base plate 20 including the inflator fixing portion 22 extends forwardly at the front end of the cover 40.

As a result of the above, the pedestrian airbag apparatus 10 shown in Figs. 1 and 2 is configured.

In the present embodiment, as shown in Figs. 4, 5, 19, and 23, the circular opening concentric with each rivet insertion hole 23 of the base plate 20 formed by joining each cutout 46e of the lower cover 40L and each cutout 52b of the upper cover 40U is greater in diameter than the head portion 71 of each rivet 70. Hence, the upper cover 40U is not fixed with the rivet 70 to the base plate 20.

However, the configuration may be such that the opening formed with the cutouts 46e and 52b is smaller in diameter than the head portion 71 of the rivet 70 so that the upper cover 40U is fixed with the rivet 70 to the base plate 20. Alternatively, the upper cover 40U may be fixed to the base plate 20 in a different manner using fasteners, such as rivets different from that described above.

The pedestrian airbag apparatus 10 is assembled in advance in the manner described above, and is delivered as a unit.

The unit of pedestrian airbag apparatus 10 is carried into a motor-vehicle assembly plant and is mounted to the vehicle body 1. As described above, the cover 40 of the pedestrian airbag apparatus 10 is used as the weather strip between the A pillar 2 and the windshield 4. The cover 40 is disposed in a corner portion between a side face of the A pillar 2 on the side of the windshield 4 and a front face of the windshield 4.

As shown in Fig. 24, in the present embodiment, retaining pieces 6 are provided on the side face of the A pillar 2 on the side of the windshield 4. The retaining pieces 6 protrude toward the side of the pedestrian airbag apparatus 10 from predetermined areas facing the respective slits 54 of the cover 40 (upper cover 40U). When mounting the pedestrian airbag apparatus 10 to the vehicle body 1, the respective retaining pieces 6 are inserted into the respective slits 54 of the cover 40. The respective retaining pieces 6 are inserted into the slits 24 of the base plate 20 (and the slits 49 of the lower cover 40L) through the slits 54. Thus, the pedestrian airbag apparatus 10 is retained in a predetermined mounting position.

The overall length of the cover 40 in the pedestrian airbag apparatus 10 is substantially the same as the overall length of the A pillar 2. The anchor portion 21 on the rear end side of the base plate 20 extending rearward at the rear end of the cover 40 overlaps the vicinity of the front end of the roof side rail 3 of the vehicle body 1. The roof side rail 3 continues to the rear end of the A pillar 2. In addition, the inflator 60, which is fixed to the inflator fixing portion 22 extending forward at the front end of the cover 40, is disposed in the vicinity of the rear end of the hood ridge 5 of the vehicle body 1 that continues to the front end of the A pillar 2.

Subsequently, the anchor portion 21 is fixed to the roof side rail 3 using a fastener (not shown), such as rivet or bolt, and the inflator 60 is fixed to the hood ridge 5 via the bracket provided therefor. This completes the operation of mounting the pedestrian airbag apparatus 10.

Thereafter, a harness (not shown) for electrical conduction from an inflator control circuit (not shown) of the vehicle body 1 is connected to the initiator of the inflator 60.

According to the pedestrian airbag apparatus 10, in the case where the pedestrian airbag apparatus 10 is disposed along the A pillar 2, the pedestrian airbag apparatus 10 is temporarily fixed to the predetermined mounting position by insertion of the retaining pieces 6, which are extended from the A pillar 2, into the slits 54, 24, and 49. In this state, the anchor portion 21 on the rear end side of the base plate 20 can be fixed to the roof side rail 3, and the inflator 60 fixed to the inflator fixing portion 22 on the front end side of the base plate 20 can be fixed to the hood ridge 5. Consequently, the operation of mounting of the anchor portion 21 to the roof side rail 3 and the operation of mounting of the inflator 60 to the hood ridge 5 can easily be performed.

Further, the pedestrian airbag apparatus 10 can be retained with the retaining pieces 6 to the A pillar 2, thereby eliminating the necessity of fixing the pedestrian airbag apparatus 10 to the A pillar 2 using bolts or nuts. This facilitates the operation of mounting the pedestrian airbag apparatus 10. Further, when fixing an airbag apparatus with bolts, rivets, or the like to the A pillar 2, a mounting seat surface for fixing needs to be provided on the A pillar 2. However, since the pedestrian airbag apparatus 10 does not require such a mounting seat surface, it has high space efficiency.

The operation of the pedestrian airbag apparatus 10 is described below.

Although not shown, a motor vehicle having the pedestrian airbag apparatus 10 is provided with various sensors of the type either for detecting a collision of the motor vehicle with a pedestrian or for predicting a collision of the motor vehicle with a pedestrian or the like. Further, the motor vehicle may be provided with both types of sensors for detection and prediction. The inflator control circuit activates the initiator for the inflator 60 in accordance with a detection or prediction signal from such sensors.

By activation of the initiator, a gas jets out from the inflator 60, and the airbag 30 is expanded by the gas from the inflator 60. The convex rib 57 of the upper cover 40U is disengaged from the engagement portion 50 of the lower cover 40L due to the expansion pressure of the airbag 30. Thereafter, as shown in Fig. 25, the airbag 30 expands in such a manner as to urge and open the main plate portion 51 of the upper cover 40U, thereby covering the front face of the A pillar 2.

In the event of expansion of the airbag 30, forces are exerted on the respective covers 40L and 40U in the direction of separation from the base plate 20. However, in the present embodiment, since the engagement portions 46 of the lower cover 40L and engagement portions 53 of the upper cover 40U engage the lower edge of the base plate 20, the respective covers 40L and 40U are enabled to securely resist the forces in the direction of separation from the base plate 20.

Further, in the present embodiment, the engagement portions 46 are provided in the lower cover 40L and the engagement portions 53 are provided in the upper cover 40U, and the engagement portions 46 and 53 are alternately engaged with the lower edge of the base plate 20 in the longitudinal direction. Hence, stresses caused to the covers 40L and 40U due to the forces in the direction of separation from the base plate 20 are widely dispersed.

The embodiment described above is one example of the present invention, and the present invention is not limited to the embodiment.

For example, in the embodiment described above, the cover 40 is constituted of the lower cover 40L for covering the lower side of the airbag 30 folded body and the upper cover 40U for covering the upper side thereof, but the configuration of the cover is not limited thereto. For example, the entirety of the cover may be constituted of a left cover for covering the left side of the airbag 30 folded body and a right cover for covering the right side of the folded body. Alternatively, the entirety of the cover may be constituted of a first cover for covering an obliquely lower side of the airbag 30 folded body and a second cover for covering an opposite obliquely upper side of the folded body.

Although, in the embodiment described above, the inflator 60 is fixed to the hood ridge 5 of the vehicle body 1, the position where the inflator 60 is fixed is not limited thereto. The method of fixing the inflator 60 to the vehicle body 1 is optionally selected, and the configuration thereof is not limited to that of the embodiment described above.

Although, in the embodiment, the pedestrian airbag apparatus 10 is mounted to the A pillar 2 on the right side (right side as viewed from an occupant) of the vehicle body 1, the configuration may of course be such that the pedestrian airbag apparatus 10 is mounted to an A pillar 2 on the left side (left side as viewed from the occupant) of the vehicle body 1. In this case, the configuration of the pedestrian airbag apparatus 10 of the above-described embodiment is reversed in the left and right direction.

While the present invention has been described in detail with reference to the specific embodiment, it should be apparent to those skilled in the art that various modifications can be made without departing from the intension and scope of the invention.

## Claims

1. A pedestrian airbag apparatus adapted to expand along an A pillar (2) of a vehicle body comprising a base plate (20) adapted to extend along the A pillar (2) in a vehicle-body forward and rearward direction, an airbag folded body (30) disposed along the base plate (20), a cover (40) for covering the airbag folded body (30), and an inflator (60) connected to a front end of the airbag folded body (30),
a rear end of the base plate (20) protrudes rearward at a rear end of the cover (40), an anchor portion (21) for mounting the pedestrian airbag apparatus to a roof side rail of the vehicle body is provided to the rear end of the base plate (20);
the inflator (60) is fixed to the base plate (20); and
a retaining portion (24) for retainment to the A pillar (2) is provided to the base plate (20) midway in a longitudinal direction, the pedestrian airbag apparatus being **characterized in that**:
the cover (40) comprises a first cover (40L) extending along one side of the airbag folded body (30) and a second cover (40U) extending along the other side of the airbag folded body (30), wherein:
in at least one of the first cover (40L) and the second cover (40U), one side of respective longitudinal sides is fixed with a fastener (70) to the base plate (20) together with the airbag; and
the other sides of the first cover (40L) and the second cover (40U) are engaged with each other to be separable when the airbag expands.

2. The pedestrian airbag apparatus according to claim 1, **characterized in that** a plurality of engagement portions (46, 53) for engagement to the base plate (20) is provided to the one side of longitudinal sides of each of the first cover (40L) and the second cover (40U).

3. The pedestrian airbag apparatus according to claim 2, **characterized in that** the engagement portions (46) of the first cover (40L) and the engagement portions (53) of the second cover (40U) are alternately provided to the base plate (20) in the longitudinal direction.

4. The pedestrian airbag apparatus according to claim 1, **characterized in that**:
the first cover (40L) is a lower cover for covering a lower side of the airbag folded body (30), and the second cove (40U) is an upper cover for covering an upper side of the airbag folded body (30); and
a side of the lower cover on the side of the A pillar (2) is fastened to the base plate (20).

5. The pedestrian airbag apparatus according to claim 1, **characterized in that** the cover (40) is used as a weather strip between the A pillar (2) of the vehicle body and a windshield (4), and is disposed in a corner portion between a side face of the A pillar (2) on the side of the windshield (4) and a front face of the windshield (4).

6. The pedestrian airbag apparatus according to claim 1, **characterized in that** an inflator fixing portion (22) is provided on a front end side of the base plate (20), wherein the inflator (60) is fixed to the inflator fixing portion (22) and the inflator (60) is fixed to a hood ridge (5) of the vehicle body.

7. The pedestrian airbag apparatus according to claim 6, **characterized in that** the inflator (60) is in a rod shape, and is disposed so that a longitudinal direction thereof coincides with the vehicle-body forward and rearward direction.

8. The pedestrian airbag apparatus according to claim 1, **characterized in that** the retaining portion includes a slit (24) through which a retaining piece (6) protruding from the A pillar (2) is inserted.

## Patentansprüche

1. Airbagvorrichtung zum Schutz für Fußgänger und zum Expandieren entlang einer A-Säule (2) eines Fahrzeugaufbaus, mit einer Grundplatte (20), die sich entlang der A-Säule (2) in Vorwärts-Rückwärtsrichtung des Fahrzeugaufbaus erstreckt, einem entlang der Grundplatte (20) angeordneten, gefalteten Airbagkörper (30), einer Abdeckung (40) zum Abdecken des gefalteten Airbagkörpers (30) und einem mit einer Stirnseite des gefalteten Airbagkörpers (30) verbundenen Gasgenerator (60),
wobei ein rückwärtiges Ende der Grundplatte (20) von einem rückwärtigen Ende der Abdeckung (40) nach hinten vorsteht, ein Ankerteil (21) zum Befestigen der Fußgänger-Airbagvorrichtung an einer dachseitigen Schiene des Fahrzeugaufbaus am rückwärtigen Ende der Grundplatte (20) vorgesehen ist;
der Gasgenerator (60) an der Grundplatte (20) befestigt ist; und
ein Halteabschnitt (24) zum Halten an der A-Säule (2) in der Mitte der Grundplatte (20) in Längsrichtung vorgesehen ist,
wobei die Fußgänger-Airbagvorrichtung **dadurch gekennzeichnet ist:**
**dass** die Abdeckung (40) eine sich entlang einer Seite des gefalteten Airbagkörpers (30) erstreckende erste Abdeckung (40L) und eine sich entlang der anderen Seite des gefalteten Airbagkörpers (30) erstreckende zweite Abdeckung (40U) aufweist, wobei:
in der ersten Abdeckung (40L) und/oder der zweiten Abdeckung (40U) eine Seite der jeweiligen Längsseiten mit einem Befestigungselement (70) gemeinsam mit dem Airbag an der Grundplatte (20) befestigt ist; und
die anderen Seiten der ersten Abdeckung (40L) und der zweiten Abdeckung (40U) ineinander in Eingriff sind und bei Expansion des Airbags trennbar sind.

2. Fußgänger-Airbagvorrichtung nach Anspruch 1, **dadurch gekennzeichnet, dass** eine Vielzahl von Eingriffabschnitten (46, 53) zum Eingriff mit der Grundplatte (20) an einer Seite der Längsseiten jeder der ersten Abdeckung (40L) und der zweiten Abdeckung (40U) vorgesehen sind.

3. Fußgänger-Airbagvorrichtung nach Anspruch 2, **dadurch gekennzeichnet, dass** die Eingriffabschnitte (46) der ersten Abdeckung (40L) und die Eingriffabschnitte (53) der zweiten Abdeckung (40U) abwechselnd an der Grundplatte (20) in Längsrichtung vorgesehen sind.

4. Fußgänger-Airbagvorrichtung nach Anspruch 1, **dadurch gekennzeichnet, dass**
die erste Abdeckung (40L) eine untere Abdeckung zum Abdecken einer Unterseite des gefalteten Airbagkörpers (30) ist und die zweite Abdeckung (40U) eine obere Abdeckung zum Abdecken einer Oberseite des gefalteten Airbagkörpers (30) ist; und
eine Seite der oberen Abdeckung auf der Seite der A-Säule (2) an der Grundplatte befestigt ist.

5. Fußgänger-Airbagvorrichtung nach Anspruch 1, **dadurch gekennzeichnet, dass** die Abdeckung (40) als Regenleiste zwischen der A-Säule (2) des Fahrzeugaufbaus und der Windschutzscheibe (4) dient und in einem Eckbereich zwischen einer Seitenfläche der A-Säule (2) auf der Seite der Windschutzscheibe (4) und einer Frontfläche der Windschutzscheibe (4) angeordnet ist.

6. Fußgänger-Airbagvorrichtung nach Anspruch 1, **dadurch gekennzeichnet, dass** ein Gasgenerator- Befestigungsteil (22) an einer Stirnseite der Grundplatte (20) vorgesehen ist, wobei der Gasgenerator (60) an dem Gasgenerator-Befestigungsteil (22) befestigt ist und der Gasgenerator (60) an einem Motorhaubensteg (5) des Fahrzeugaufbaus befestigt ist.

7. Fußgänger-Airbagvorrichtung nach Anspruch 6, **dadurch gekennzeichnet, dass** der Gasgenerator (60) stabförmig ist und so angeordnet ist, dass dessen Längsrichtung mit der Fahrzeugaufbau- Vorwärts- und Rückwärtsrichtung übereinstimmt.

8. Fußgänger-Airbagvorrichtung nach Anspruch 1, **dadurch gekennzeichnet, dass** der Halteabschnitt einen Schlitz (24) aufweist, durch das von der A-Säule (2) vorstehende Halteteil (6) gesteckt ist.

## Revendications

1. Dispositif de coussin gonflable de sécurité pour piéton apte à se déployer le long d'un montant A (2) d'une carrosserie de véhicule, comprenant une plaque de base (20) prévue pour s'étendre le long du montant A (2) dans le sens de la longueur de la carrosserie de véhicule, un corps de coussin gonflable plié (30) disposé le long de la plaque de base (20), un couvercle (40) destiné à recouvrir le corps de coussin gonflable plié (30), et un générateur de gaz (60) relié à une extrémité avant du corps de coussin gonflable plié (30),
une extrémité arrière de la plaque de base (20) dépassant vers l'arrière d'une extrémité arrière du couvercle (40), une partie d'ancrage (21) pour monter le dispositif de coussin gonflable de sécurité pour piéton sur un rail de toit de la carrosserie de véhicule étant prévue à l'extrémité arrière de la plaque de base (20) ;
le générateur de gaz (60) étant fixé sur la plaque de base (20) ; et
une partie de maintien (24) pour le maintien sur le montant A (2) étant prévue sur la plaque de base (20), au milieu de celle-ci dans le sens de la longueur, ledit dispositif de coussin gonflable de sécurité pour piéton étant **caractérisé en ce que** :
le couvercle (40) comprend un premier couvercle (40L) s'étendant le long d'une face du corps de coussin gonflable plié (30) et un deuxième couvercle s'étendant le long de l'autre face du corps de coussin gonflable plié (30), où :
dans au moins un des deux couvercles (40U), le premier couvercle (40L) et le deuxième couvercle (40U), un côté des longueurs respectives est fixé par une attache (70) sur la plaque de base (20) avec le coussin gonflable ; et
les autres côtés du premier couvercle (40L) et du deuxième couvercle (40U) étant emboîtés l'un dans l'autre de manière à pouvoir être séparés par l'expansion du coussin gonflable.

2. Dispositif de coussin gonflable de sécurité pour piéton selon la revendication 1, **caractérisé en ce qu'**une pluralité de parties d'engagement (46, 53) pour le montage sur la plaque de base (20) est prévue sur la longueur du premier couvercle (40L) ainsi que du deuxième couvercle (40U).

3. Dispositif de coussin gonflable de sécurité pour piéton selon la revendication 2, **caractérisé en ce que** les parties d'engagement (46) du premier couvercle (40L) et les parties d'engagement (53) du deuxième couvercle (40U) sont disposées de manière alternée sur la plaque de base (20) dans le sens de la longueur.

4. Dispositif de coussin gonflable de sécurité pour piéton selon la revendication 1, **caractérisé en ce que** :
le premier couvercle (40L) est un couvercle inférieur destiné à recouvrir un côté inférieur du corps de coussin gonflable plié (30), et le deuxième couvercle (40U) est un couvercle supérieur destiné à recouvrir un côté supérieur du corps de coussin gonflable plié (30) ; et
**en ce qu'**une face du couvercle inférieur est fixée sur la plaque de base (20) du côté du montant A (2).

5. Dispositif de coussin gonflable de sécurité pour piéton selon la revendication 1, **caractérisé en ce que** le couvercle (40) est utilisé comme une bande de scellement entre le montant A (2) de la carrosserie de véhicule et un pare-brise (4), et est disposé dans une partie d'angle entre une face latérale du montant A (2) du côté du pare-brise (4) et une face avant du pare-brise (4).

6. Dispositif de coussin gonflable de sécurité pour piéton selon la revendication 1, **caractérisé en ce qu'**une partie de fixation (22) de générateur de gaz est prévue sur un côté d'extrémité avant de la plaque de base (20), le générateur de gaz (60) étant fixé sur la partie de fixation (22) de générateur de gaz, et le générateur de gaz (60) étant fixé contre un bord de capot (5) de la carrosserie de véhicule.

7. Dispositif de coussin gonflable de sécurité pour piéton selon la revendication 6, **caractérisé en ce que** le générateur de gaz (60) est de forme longiligne, et est disposé de telle manière que sa longueur corresponde au sens de la longueur de la carrosserie de véhicule.

8. Dispositif de coussin gonflable de sécurité pour piéton selon la revendication 1, **caractérisé en ce que** la partie de maintien comporte une fente (24) où est insérée une pièce de maintien (6) faisant saillie du montant A (2).
